# EUROPEAN PATENT APPLICATION

(11) **EP 4 160 550 A1**
(43) Date of publication of application: **05.04.2023**
(21) Application number: 22183310.6
(22) Date of filing: 06.07.2022
(51) Int. Cl.: G06V 20/52

(54) **INFORMATION PROCESSING PROGRAM, INFORMATION PROCESSING METHOD, AND INFORMATION PROCESSING DEVICE**

(30) Priority: 30.09.2021 JP 2021161126
(71) Applicant: FUJITSU LIMITED, Kawasaki-shi, Kanagawa 211-8588 (JP)
(72) Inventor: Ushijima, Satoru, Kawasaki-shi, Kanagawa, 211-8588 (JP); Ishida, Ryo, Kawasaki-shi, Kanagawa, 211-8588 (JP); Aoki, Yasuhiro, Kawasaki-shi, Kanagawa, 211-8588 (JP)
(74) Representative: Hoffmann Eitle

(57) **Abstract**

A n information processing program is provided. The information processing program causes a computer to execute processing including tracking an action taken by a user on an object on the basis of a captured image, distinguishing, on the basis of the action, between a first action in which the user holds the object and a second action in which the user releases the object held by the user, storing, on a first storage unit, first identification information and first location information with respect to the first action, storing, on a second storage unit, second identification information and second location information with respect to the second action, and in a case where the first action is detected at a position indicated in the second location information, storing the second identification information and the second location information on the first storage unit.

## Description

### FIELD

The embodiments discussed herein are related to an information processing program, an information processing method, and an information processing device.

### BACKGROUND

In stores such as convenience stores, for the purpose of reducing labor costs by reducing checkout processes, avoiding long lines for checkout, and the like, self-checkouts have been introduced in which customers scan and register items by themselves to pay for the items. In such a system in which customers scan items by themselves, it is important to detect fraudulent behavior such as not scanning an item to be purchased, so-called skip scanning an item.

As a system for detecting fraudulent behavior of customers in a store, for example, a system has been developed in which a surveillance camera in the store is used to detect suspicious behavior or fraudulent behavior such as shoplifting of customers.

Patent Document 1: Japanese Laid-open Patent Publication No. 2020-053019

However, in a case where skip scanning an item is detected on the basis of an image captured by the surveillance camera, the system side needs to identify individual items, namely, identify which item has been scanned. As a method for identifying items, for example, a machine learning model for identifying an item on the basis of a captured image may be used; however, it is unrealistic to learn each and every item sold in the store because there are many types of items and switching to new items is fast.

In one aspect, it is possible to more accurately detect the action taken by the customer who uses the self-checkout.

### SUMMARY

According to an aspect of an embodiment, an information processing program that causes a computer to execute processing including tracking an action taken by a user on an object on a basis of a captured image, distinguishing, on a basis of the action, between a first action in which the user holds the object and a second action in which the user releases the object held by the user, storing, on a first storage unit, first identification information and first location information with respect to the first action, storing, on a second storage unit, second identification information and second location information with respect to the second action, and in a case where the first action is detected at a position indicated in the second location information, storing the second identification information and the second location information on the first storage unit.

### BRIEF DESCRIPTION OF DRAWINGS

FIG. 1 is a diagram illustrating an example of the configuration of a fraud detection system according to Example 1;
FIG. 2 is a diagram illustrating an example of a self-checkout terminal 100 according to Example 1;
FIG. 3 is a diagram illustrating an example of an item purchase with a self-checkout according to Example 1;
FIG. 4 is a diagram illustrating an example of the configuration of a management device 10 according to Example 1;
FIG. 5 is an explanatory diagram of HOID;
FIG. 6 is a diagram illustrating an example of a problem of item tracking by HOID and the solution;
FIG. 7 is a diagram illustrating an example of an item tracking method by HOID according to Example 1;
FIG. 8 is a diagram illustrating an example of a method for determining item tracking by HOID according to Example 1;
FIG. 9 is a diagram illustrating an example of a method for counting an item that has exited from a temporary stand ROI according to Example 1;
FIG. 10 is a diagram illustrating an example of a method for counting an item that has entered a register front ROI according to Example 1;
FIG. 11 is a diagram illustrating an example of data stored in a temporary stand ROI list 33 according to Example 1;
FIG. 12 is a diagram illustrating an example of data stored in a register front ROI list 34 according to Example 1;
FIG. 13 is a diagram illustrating an example of data stored in an object-being-tracked list 35 according to Example 1;
FIG. 14 is a diagram illustrating an example of data stored in a tracking-suspended-object list 36 according to Example 1;
FIG. 15 is a diagram illustrating an example of data transition (1) of each tracking list according to Example 1;
FIG. 16 is a diagram illustrating an example of data transition (2) of each tracking list according to Example 1;
FIG. 17 is a flowchart depicting the flow of item tracking processing (1) according to Example 1;
FIG. 18 is a flowchart depicting the flow of item tracking processing (2) according to Example 1;
FIG. 19 is an explanatory diagram of an example of the hardware configuration of the management device 10;
FIG. 20 is an explanatory diagram of an example of the hardware configuration of the self-checkout terminal 100; and
FIG. 21 is an explanatory diagram of an example of the hardware configuration of a staff terminal 300.

### DESCRIPTION OF EMBODIMENT(S)

Preferred embodiments of the present invention will be explained with reference to accompanying drawings. Note that this embodiment is not limited to the examples. In addition, the examples may be appropriately combined to the extent that there is no contradiction.

### Example 1

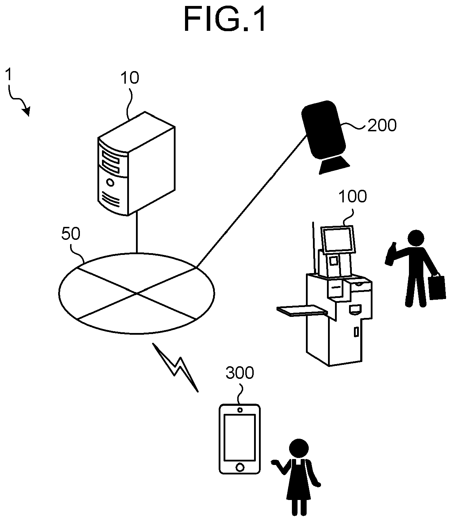

First, a fraud detection system for implementing this embodiment is described. FIG. 1 is a diagram illustrating an example of the configuration of the fraud detection system according to Example 1. As illustrated in FIG. 1, a fraud detection system 1 is a system in which a management device 10 and a self-checkout terminal 100 are connected via a network 50 to perform communication with each other.

Further, the management device 10 is connected also to a camera device 200 and a staff terminal 300 via the network 50 to perform communication with each other.

The network 50 can be various communication networks such as intranets used in a store, e.g., a convenience store, regardless of whether the network 50 is wired or wireless. Further, the network 50 may be configured by, for example, an intranet and the Internet via a network device such as a gateway or another device (not illustrated), instead of a single network.

The management device 10 is, for example, an information processing device such as a desktop personal computer (PC), a laptop PC, or a server computer that is installed in a store such as a convenience store and is used by store staff or an administrator.

The management device 10 receives, from the camera device 200, a plurality of images, which are obtained by capturing with the camera device 200, of a customer who uses the self-checkout terminal 100 to make a payment (hereinafter, sometimes referred to as a "person" or "user" simply). Note that, strictly speaking, the plurality of images is images captured by the camera device 200, namely, a series of frames of a moving image.

Further, the management device 10 uses an object detection technology and so on to identify a person or an item in a captured image. The management device 10 then detects an action in which the person takes an item, scans an item barcode, and registers the same in the self-checkout terminal 100, and so on.

Note that FIG. 1 illustrates the management device 10 as one computer; however, the management device 10 may be a distributed computing system configured by a plurality of computers. Alternatively, the management device 10 may be a cloud computing device managed by a service provider which provides a cloud computing service.

The self-checkout terminal 100 is an information processing terminal that is installed in a checkout area of a store such as a convenience store and used by a customer who scans and registers an item by himself/herself to make a payment. The self-checkout terminal 100 includes a code reader to scan an item barcode and a touch panel display unit for displaying a checkout screen, or, alternatively, is connected to an external code reader or a display to perform communication therewith.

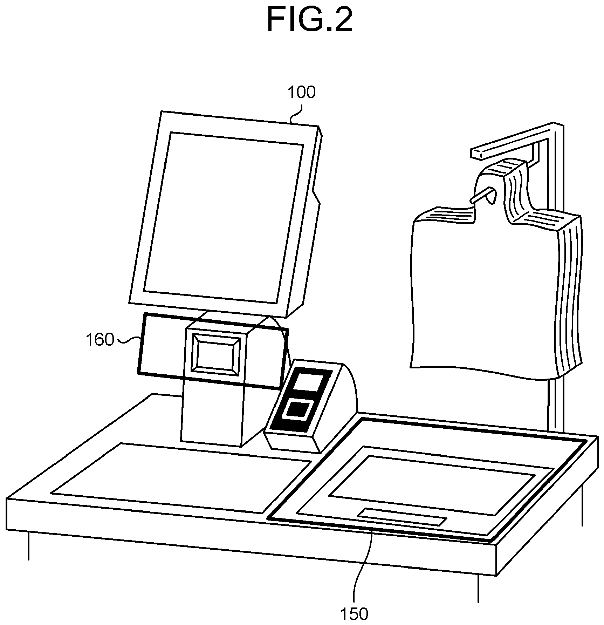

FIG. 2 is a diagram illustrating an example of the self-checkout terminal 100 according to Example 1. As illustrated in FIG. 2, the self-checkout terminal 100 is provided together with a temporary stand on which to place an item at checkout, and the temporary stand is indicated by a temporary stand region 150. At checkout, the customer places the item on the temporary stand, takes the item from the temporary stand, scans an item barcode with a code reader indicated by a register front region 160, and registers the item to be purchased in the self-checkout terminal 100. The customer then operates a checkout screen displayed on a display of the self-checkout terminal 100 to pay for the item registered in the self-checkout terminal 100 by cash, electronic money, a credit card, or the like.

Referring back to the description of FIG. 1, the camera device 200 is a surveillance camera that is installed in, for example, an upper part of the self-checkout terminal 100 or the like and is operable to capture an image of a customer who uses the self-checkout terminal 100 to make a payment. The image captured by the camera device 200 is sent to the management device 10.

The staff terminal 300 may be a mobile terminal such as a smartphone or a tablet PC carried by staff in the convenience store, or, alternatively, an information processing device such as a desktop PC or a laptop PC installed at a predetermined location of the store. The staff terminal 300 receives an alert from the management device 10 in a case where the management device 10 detects fraudulent behavior of a customer such as skip scanning an item. Note that the staff terminal 300 may be provided for each staff member of the store for example, and a terminal that receives the alert may be limited to, for example, a terminal that a specific staff member carries.

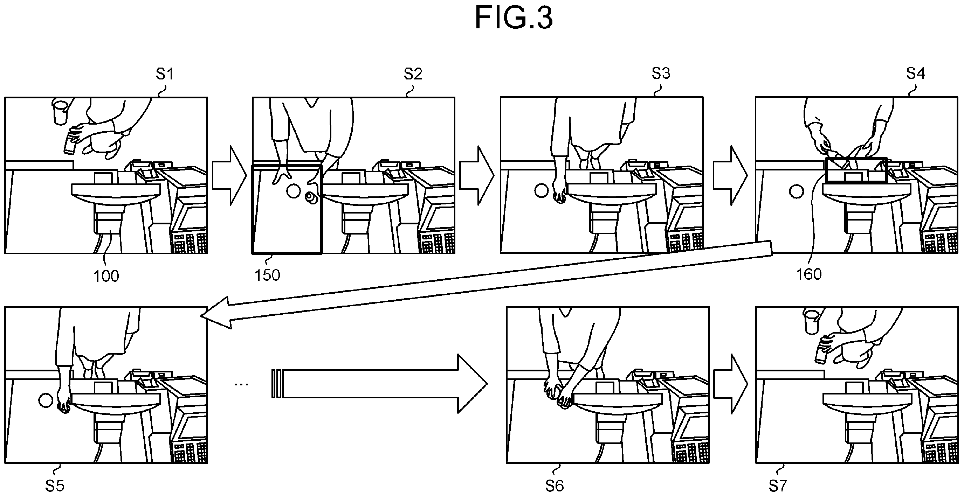

The description goes on to, along the flow of FIG. 3, a method in which a customer scans an item to register the item in the self-checkout terminal 100 by himself/herself (hereinafter, may be referred to as "self-scan") to purchase the item. FIG. 3 is a diagram illustrating an example of an item purchase with a self-checkout according to Example 1.

As illustrated in FIG. 3, first, the customer holds an item to be purchased and enters a checkout area where the self-checkout terminal 100 is installed (Step S1). Next, the customer places the item on the temporary stand indicated by the temporary stand region 150 (Step S2). In the example of FIG. 3, two items are placed on the temporary stand.

Next, the customer takes the item placed on the temporary stand in order to scan the item (Step S3). The customer then scans an item barcode of the item thus taken with the code reader indicated by the register front region 160, and registers the item to be purchased in the self-checkout terminal 100 (Step S4).

Next, the customer puts down the item that has been scanned on the temporary stand again (Step S5). The customer then repeats Step 3 and Step 4 to complete scanning all the items to be purchased.

Then, when finishing scanning all the items and paying for the items registered in the self-checkout terminal 100, the customer holds the items purchased (Step S6) and leaves the checkout area (Step S7).

The item purchase by the self-scan has been described above with reference to FIG. 3. However, in the self-scan, for example, a customer can scan only a part of items to be purchased and pay for only the scanned items with the self-checkout terminal 100, which allows the customer not to pay for some items. In particular, it is easy for staff or the like to discover fraudulent behavior in a case where the number of items is small; however, for example, it is difficult for the staff or the like to discover fraudulent behavior in a case where the number of items is large and some items are not scanned. In light of the above, the management device 10 according to this embodiment recognizes an action taken by a customer on the basis of an image captured by the camera device 200 to detect fraudulent behavior.

### Functional Configuration of Management Device 10

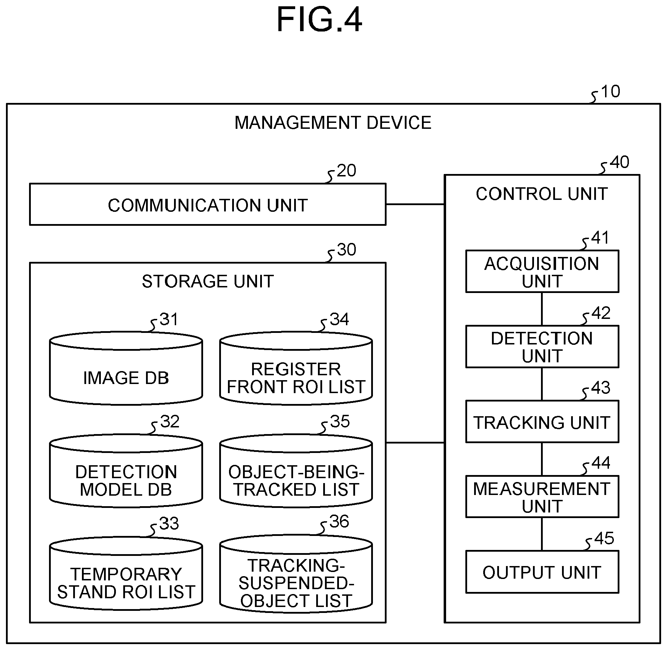

The description goes on to the functional configuration of the management device 10 serving as the execution entity of this embodiment. FIG. 4 is a diagram illustrating an example of the configuration of the management device 10 according to Example 1. As illustrated in FIG. 4, the management device 10 includes a communication unit 20, a storage unit 30, and a control unit 40.

The communication unit 20 is a processing unit that controls communication with other devices such as the self-checkout terminal 100 and the camera device 200, and is, for example, a communication interface such as a network interface card.

The storage unit 30 has a function to store various types of data and a program executed by the control unit 40, and is implemented by, for example, a storage device such as a memory or a hard disk. The storage unit 30 stores an image DB 31, a detection model DB 32, a temporary stand ROI list 33, a register front ROI list 34, an object-being-tracked list 35, a tracking-suspended-object list 36, and so on. Here, the ROI is an abbreviation of "region of interest" which means a target region, a region of interest, or the like.

The image DB 31 stores a plurality of captured images which is a series of frames captured by the camera device 200.

The detection model DB 32 stores a machine learning model for detecting a person or an object in a captured image of the camera device 200. In this embodiment, it is considered to be unrealistic to learn each and every item because there are many types of items sold in a store and switching to new items is fast. In light of the above, in this embodiment, for example, a person or an object is detected using human-object interaction detection (HOID) which is an existing technology enabling detection of an object with a small amount of training data.

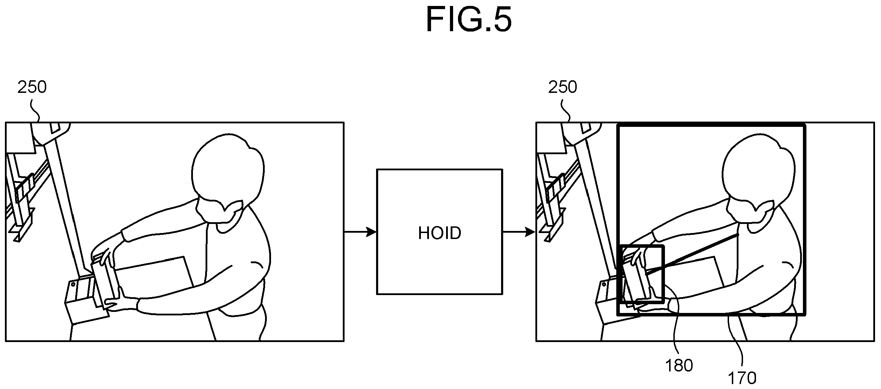

Here, the HOID is explained. FIG. 5 is an explanatory diagram of the HOID. The HOID detects an interaction between a person and an object, and for example, as illustrated in FIG. 5, the HOID is a technology for using a captured image 250 as input data to detect a person and an object that are determined to have an interaction relationship such as a person holding an object in his/her hand. The detection of a person or an object is indicated as, for example, a bounding box (BB) which is a rectangular region surrounding the detected person or object as illustrated in FIG. 5. In the case of FIG. 5, the BB of the person and the BB of the object are a person BB 170 and an object BB 180, respectively. Further, in the HOID, a probability value of the interaction between the person and the object and a class name (for example, "hold") are also outputted. In this embodiment, the HOID is used to detect the object held by the person as an item.

Referring back to the description of FIG. 4, the temporary stand ROI list 33 stores data on an item that enters and leaves the temporary stand region 150 described with reference to FIGS. 2 and 3.

The register front ROI list 34 stores data on an item that enters and leaves the register front region 160 described with reference to FIGS. 2 and 3.

The object-being-tracked list 35 stores data on an item that is detected by the management device 10 and is being tracked in response to a person taking the item and the location information of the item. Here, the location information of the item is, for example, x and y coordinates of the upper left and the lower right of a bounding box that is a rectangular region surrounding the item in the captured image.

The tracking-suspended-object list 36 stores data on an item which is detected by the management device 10 and of which tracking has been suspended in response to a person, who has taken the item, releasing the item and the location information of the item.

Note that the above information stored in the storage unit 30 is merely an example, and the storage unit 30 can store various information other than the information described above.

The control unit 40 is a processing unit that controls the entirety of the management device 10 and is, for example, a processor or the like. The control unit 40 includes an acquisition unit 41, a detection unit 42, a tracking unit 43, a measurement unit 44, and an output unit 45. Note that each processing unit is an example of an electronic circuit included in the processor or an example of a process executed by the processor.

The acquisition unit 41 acquires, from the camera device 200, a plurality of captured images which is a series of frames captured by the camera device 200. The captured images thus acquired are stored in the image DB 31.

The detection unit 42 uses an existing technology such as the HOID to detect a person, an object, and the like that have an interaction relationship in an image captured by the camera device 200. Note that the person or the object thus detected may be indicated by a bounding box.

Further, the detection unit 42 determines whether or not a similarity between the bounding box indicated by the location information of the item stored in the tracking-suspended-object list 36 and the bounding box of the item in the HOID detection result is equal to or greater than a predetermined threshold. Further, the similarity between the bounding boxes is detailed later; however, for example, the similarity is a distance between both the bounding boxes, and it is determined that the shorter the distance therebetween is, the more similar both the bounding boxes are. Then, in a case where the similarity between both the bounding boxes is equal to or greater than the predetermined threshold, the detection unit 42 detects an action in which the person takes again an item for which tracking is suspended and which is stored in the tracking-suspended-object list 36.

Further, the detection unit 42 determines whether or not a similarity between the bounding box indicated by the location information of the item stored in the object-being-tracked list 35 and the bounding box of the item in the HOID detection result is equal to or greater than a predetermined threshold. Then, in a case where the similarity between both the bounding boxes is equal to or greater than the predetermined threshold, the detection unit 42 determines that the item which is being tracked and is stored in the object-being-tracked list 35 is not moved.

Note that, in a case where it is determined that an item which is being tracked and is stored in the object-being-tracked list 35 is not moved a predetermined number of times or more in a plurality of captured images captured in succession by the camera device 200, an action in which the item, held by the person, is released is detected.

The tracking unit 43 tracks the action taken by the person on the object, using the HOID, in the image captured by the camera device 200. Further, the tracking unit 43 distinguishes, on the basis of the action being tracked, between an action in which the person holds the object and an action in which the person releases the object held. The tracking unit 43 then stores, in the object-being-tracked list 35, the identification information and the location information of the object with respect to the action in which the person holds the object. In addition, the tracking unit 43 stores, in the tracking-suspended-object list 36, the identification information and the location information of the object with respect to the action in which the person releases the object held. Further, in a case where the tracking unit 43 detects the action in which the person holds the object at a location indicated in the location information of the object stored in the tracking-suspended-object list 36, the tracking unit 43 stores, in the object-being-tracked list 35, the identification information and the second location information of the object stored in the tracking-suspended-object list 36.

The measurement unit 44 detects that the object being tracked has exited the temporary stand region 150 in the captured image, and counts the number of times thereof. The measurement unit 44 also detects that the object has entered the register front region 160 in the captured image, and counts the number of times thereof.

The output unit 45 outputs, for example, the number of times the object has exited the temporary stand region 150 and the number of times the object has entered the register front region 160, both of which are counted by the measurement unit 44. Note that the output of each number of times by the output unit 45 may be notification to the staff terminal 300 or the like in the form of message or the like. Further, the content notified to the staff terminal 300 or the like needs not to be the number of times itself. This may be, for example, data generated on the basis of each number of times, such as data indicating a possibility that the number of times the object has exited the temporary stand region 150 does not match the number of times the object has entered the register front region 160 and scanning an item is skipped.

As described above, the management device 10 tracks the action taken by the person on the object, using the HOID, on the basis of the image captured by the camera device 200; however, since the HOID has a problem described below, this embodiment also solves the problem.

The problem of the HOID is described. Since the HOID involves detecting an article in a single captured image, in order to recognize that a certain article has entered or left a predetermined region in a plurality of captured images that is captured in succession, there is a need to assign an identifier (ID) to the article and track the article. Further, in the HOID, a detection is made when a person takes an object and no detection is made when the person releases the object; therefore, tracking starts when the person takes the object and ends when the person releases the object. This arises a problem that, when the person releases the object and takes the object again, a new ID is assigned or an ID of another object is used erroneously.

Therefore, in the case of tracking an item using the HOID, an ID assigned to the item is switched when the item is placed on the temporary stand, the hand is taken off, and the item is taken again, so that one item is erroneously counted a plurality of times. More specifically, for example, the number of times the item has entered the register front region 160 is counted both when the item is brought into the checkout area to pass in front of a cash register and when the item is picked up from the temporary stand and scanned, so that the number of times, which is to be once correctly, indicates twice.

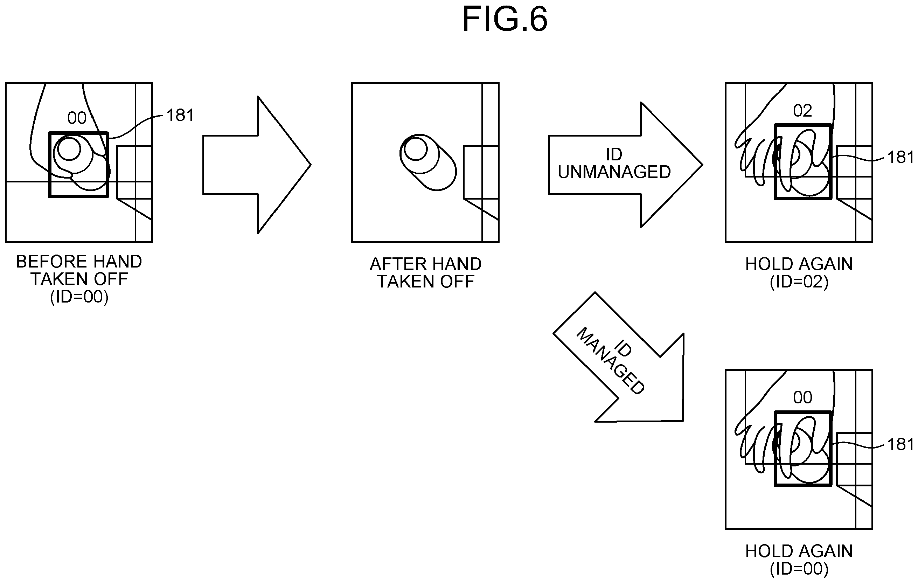

FIG. 6 is a diagram illustrating an example of a problem of item tracking by the HOID and the solution. The upper route of ID unmanaged in FIG. 6 indicates a problem of item tracking by the HOID. In the upper route, since an ID of "00" is assigned when the person takes the item indicated by an object BB 181, the ID before the hand is taken off the item is "00". Then, when the person takes his/her hand off the item, the object BB 181 is not detected, and when the same item is taken again, the object BB 181 is detected. However, since a new ID is assigned when the item is taken again, the ID indicates "02", and the management device 10 recognizes the item as an item different from the item with the ID "00" before the hand is taken off.

In light of the above, in this embodiment, IDs are managed as illustrated in the lower route of FIG. 6, and even in a case where the person takes his/her hand off the item, the same ID is used as-is so that the same item can be tracked as the same item. Therefore, when tracking the item ends in response to the person taking his/her hand off the item, the management device 10 determines whether the person has placed the item somewhere or has lost sight of the item. Next, in a case where determining that the person has placed the item, the management device 10 stores, in the tracking-suspended-object list 36, a state at the end of tracking, for example, the assigned ID and the coordinate position of the bounding box of the item in the captured image. Then, in a case where the HOID detection result is obtained at the same position as the coordinate position stored in the tracking-suspended-object list 36, the management device 10 assumes that the item detected by the HOID is the same as the item indicated by the ID stored in the tracking-suspended-object list 36, and takes over the stored ID to resume tracking.

Note that the case where the HOID detection result is obtained at the same position as the coordinate position stored in the tracking-suspended-object list 36 does not have to be completely the same. For example, the case where a similarity between a bounding box indicated in the coordinate position and a bounding box of the item in the HOID detection result is equal to or greater than a predetermined threshold may also be included.

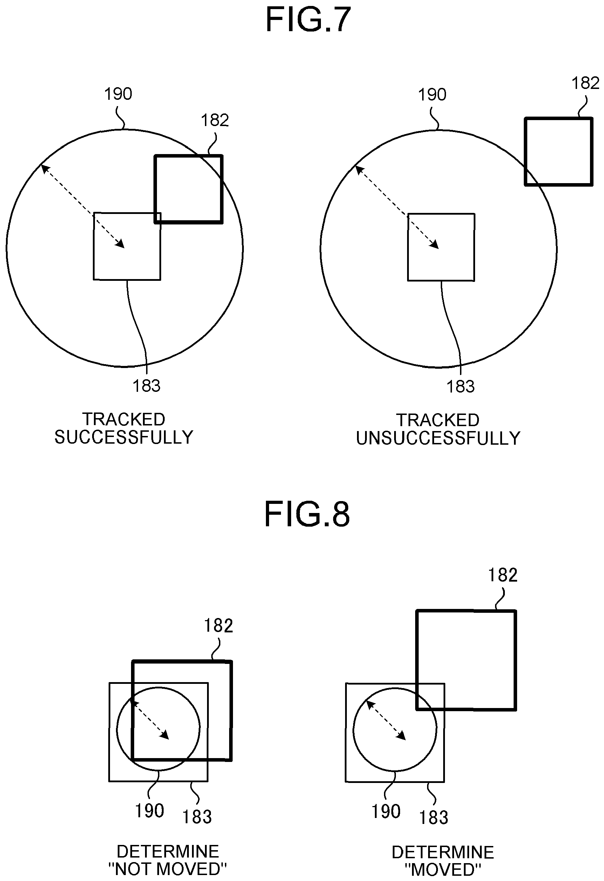

FIG. 7 is a diagram illustrating an example of an item tracking method by the HOID according to Example 1. In FIG. 7, the bounding box of the item detected by the HOID is indicated as an object BB 182, and the bounding box of the item being tracked indicated in the coordinate position stored in the object-being-tracked list 35 is indicated as an object BB 183.

As illustrated on the left side of FIG. 7, for example, in a case where a distance between the center coordinates of the object BB 182 and the center coordinates of the object BB 183 is a distance within the range of a determination region 190 that is a region within two bounding boxes from the center coordinates of the object BB 183, it is determined that a similarity between both the BBs is equal to or greater than a predetermined threshold. In such a case, the management device 10 determines that the item of the HOID detection result indicated by the object BB 182 and the item being tracked indicated by the object BB 183 are identical, which successfully tracks the item.

On the other hand, as illustrated on the right side of FIG. 7, for example, in a case where the distance between the center coordinates of the object BB 182 and the center coordinates of the object BB 183 is a distance outside the range of the determination region 190, it is determined that the similarity between both the BBs is less than the predetermined threshold and the items indicated by both the BBs are different items. In such a case, the item detected by the HOID, which is indicated by the object BB 182, will be tracked as an item different from the item being tracked.

The determination method for a case where the item is taken and tracked has been described with reference to FIG. 7, and next, a determination method for a case where the person takes his/her hand off the item taken and places the item is described with reference to FIG. 8. FIG. 8 is a diagram illustrating an example of a method for determining item tracking by the HOID according to Example 1. In FIG. 8, the bounding box of the item detected by the HOID is indicated as the object BB 182, and the bounding box of the item being tracked indicated in the coordinate position stored in the object-being-tracked list 35 is indicated as the object BB 183.

As illustrated on the left side of FIG. 8, for example, in a case where a distance between the center coordinates of the object BB 182 and the center coordinates of the object BB 183 is a distance within the range of the determination region 190, it is determined that the similarity between both the BBs is equal to or greater than a predetermined threshold. In such a case, the item of the HOID detection result indicated by the object BB 182 is determined to be "not moved", namely, to "have been placed". Note that in a case where the item is determined to be "not moved", the item does not need to be immediately determined to "have been placed", and for example, it is possible to count the determination of "not moved" in consecutive frames and in a case where the count value reaches 5 or more, it is possible to determine that the item "has been placed". Further, the size of the determination region 190 in FIG. 8 may be different from the size of the determination region 190 in FIG. 7, and may be a region within 0.5 bounding box, for example. In a case where it is determined that the item is "not moved", tracking the item which is being tracked and indicated by the object BB 183 is suspended.

On the other hand, as illustrated on the right side of FIG. 8, for example, in a case where the distance between the center coordinates of the object BB 182 and the center coordinates of the object BB 183 is a distance outside the range of the determination region 190, it is determined that the similarity between both the BBs is smaller than the predetermined threshold. In such a case, the item of the HOID detection result indicated by the object BB 182 is determined to be "moved". Note that, in a case where it is determined that the item is "moved", the counter, which counts in a case where it is determined that the item is "not moved", may be reset.

As described above, the management device 10 tracks the item on the basis of the bounding box of the item detected by the HOID and the bounding box of the item indicated in the coordinate position stored in the object-being-tracked list 35 and the tracking-suspended-object list 36. The object-being-tracked list 35 and the tracking-suspended-object list 36 are described.

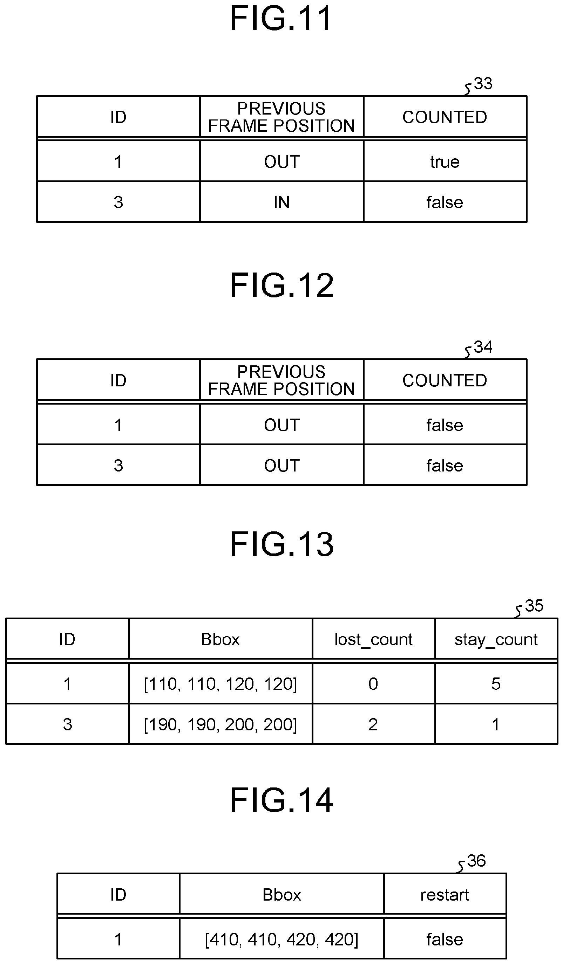

FIG. 13 is a diagram illustrating an example of data stored in the object-being-tracked list 35 according to Example 1. The data of the object-being-tracked list 35 is newly generated, for example, when an item is detected by the HOID and an item ID is assigned thereto.

In the object-being-tracked list 35, for example, "ID" indicating the item ID and "Bbox" indicating the position of the bounding box of the item being tracked are stored in correlation with each other. Further, the object-being-tracked list 35 also stores, for example, "lost_count" indicating the number of times the item being tracked has been lost and "stay_count" indicating the number of times the item being tracked has been determined to be "not moved" in correlation with each other.

In order to indicate the position of the bounding box of the item being tracked, the "Bbox" of the object-being-tracked list 35 is updated, for example, with the position of the bounding box of the item detected for each frame. Further, in a case where the item being tracked is lost for each frame, the "lost_count" is counted up, and for example, in a case where the number of times exceeds a predetermined number of times such as four times, the tracking is suspended. Further, in a case where it is determined that the item is "not moved" for each frame, the "stay_count" is counted up, and for example, in a case where the number of times exceeds a predetermined number of times such as five times, it is determined that the item "has been placed".

FIG. 14 is a diagram illustrating an example of data stored in the tracking-suspended-object list 36 according to Example 1. The data of the tracking-suspended-object list 36 is newly generated, for example, in a case where it is determined that the item "has been placed".

In the tracking-suspended-object list 36, for example, "ID" indicating the item ID, "Bbox" indicating the position of the bounding box of the item for which tracking is suspended, and "restart" indicating whether or not the tracking is resumed are stored in correlation with one another. In the "restart", "false" is set as an initial value, and "false" is updated with "true" when tracking the item is resumed. Note that, in a case where tracking the item is resumed and then the tracking is suspended again, the value of the "restart" is updated with "false" at the position of the bounding box of the item when the "Bbox" is suspended.

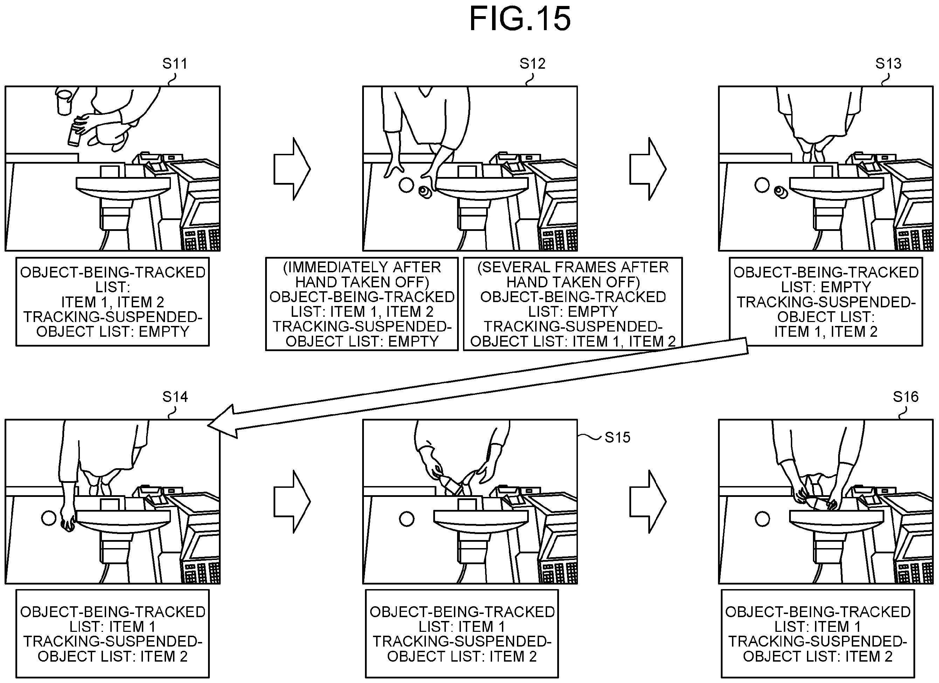

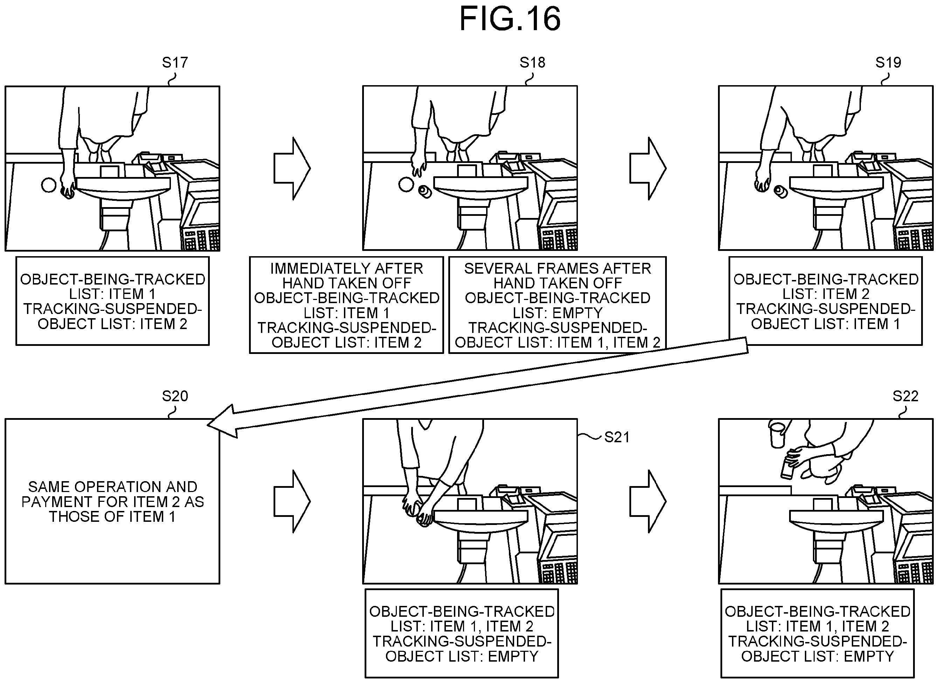

In this manner, the data of the object-being-tracked list 35 and the tracking-suspended-object list 36 is updated in accordance with the tracking status of the item. The description goes on to data transition of the object-being-tracked list 35 and the tracking-suspended-object list 36 with reference to FIGS. 15 and 16.

FIG. 15 is a diagram illustrating an example of data transition (1) of each tracking list according to Example 1. As illustrated in FIG. 15, first, when a customer holds an item to be purchased and enters a checkout area where the self-checkout terminal 100 is installed, the item is detected by the HOID, data is generated in the object-being-tracked list 35, and tracking the item is started (Step S11). In the example of FIG. 15, since the person holds two items, two sets of data of an item 1 and an item 2 are generated in the object-being-tracked list 35. Note that, at this time point, no data of the item 1 and the item 2 is generated in the tracking-suspended-object list 36, namely, the tracking-suspended-object list 36 is empty.

Next, when the customer places the items on the temporary stand and it is determined that the items "have been placed" after several frames, the data of the object-being-tracked list 35 is deleted, two sets of data on the item 1 and the item 2 are generated in the tracking-suspended-object list 36, and the tracking the items is suspended (Step S12). Then, since no detection by the HOID is performed in a state where the customer does not hold the item 1 or the item 2, there is no change in the data of the object-being-tracked list 35 and the tracking-suspended-object list 36 (Step S13).

Next, when the customer holds the item 1 placed on the temporary stand to scan the same, the item 1 is detected by the HOID, data on the item 1 is generated in the object-being-tracked list 35, and tracking the item 1 is resumed (Step S14). Then, when the customer takes the item 1 out of the temporary stand while holding the item 1 (Step S15) to scan the same (Step S16), the item 1 is continuously tracked. During this time, the data on the item 1 in the object-being-tracked list 35 is updated on the basis of the coordinates of the bounding box of the item 1 detected for each frame.

FIG. 16 is a diagram illustrating an example of data transition (2) of each tracking list according to Example 1. When the item 1 is scanned as illustrated in FIG. 15 (Step S16), the customer then puts the item 1 back to the temporary stand (Step S17). The data on the item 1 in the object-being-tracked list 35 is updated on the basis of the coordinates of the bounding box of the item 1 detected for each frame, during this time as well.

Next, when it is determined that the item 1 "has been placed" after several frames, the data on the item 1 in the object-being-tracked list 35 is deleted, data on the item 1 is generated in the tracking-suspended-object list 36, and tracking the item 1 is suspended (Step S18).

Next, when the customer holds the item 2 placed on the temporary stand to scan the same, the item 2 is detected by the HOID, data on the item 2 is generated in the object-being-tracked list 35, and tracking the item 2 is resumed (Step S19). Then, as with the case of the item 1, the item 2 is continuously tracked from when the customer takes the item 2 out of the temporary stand while holding the item 2 to scan the same to when it is determined that the item 2 "has been placed" (Step S20). When it is determined that the item 2 also "has been placed", the data on the item 2 in the object-being-tracked list 35 is deleted, data on the item 2 is generated in the tracking-suspended-object list 36, and tracking the item 2 is suspended.

Next, when the customer holds the item 1 and the item 2 placed on the temporary stand to leave the checkout area, both the items are detected by the HOID, data on both the items is generated in the object-being-tracked list 35, and tracking both the items is resumed (Step S21). Then, when the customer takes the items 1 and 2 out of the temporary stand while holding the items 1 and 2, tracking both the items is continuously performed, and the data on both the items in the object-being-tracked list 35 is updated on the basis of the coordinates of the bounding boxes of both the items detected for each frame (Step S22).

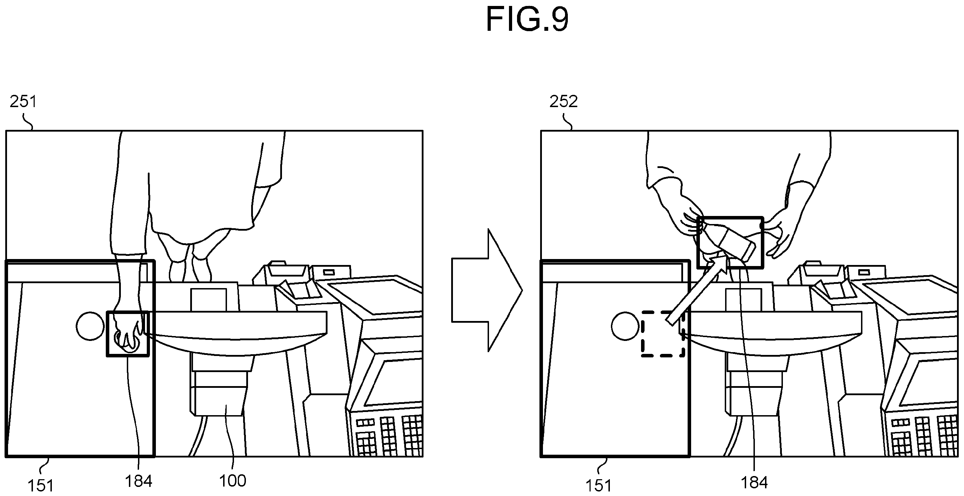

The description goes on to a method for counting an item that has exited the temporary stand region 150 and an item that has entered the register front region 160, which is executed in order to detect skip scanning an item. FIG. 9 is a diagram illustrating an example of a method for counting an item that has exited from the temporary stand ROI according to Example 1. In FIG. 9, a temporary stand ROI 151 indicates the temporary stand region 150 in captured images 251 and 252. The management device 10 counts the item which leaves the temporary stand ROI 151 on the basis of the positional relationship between the items detected for each frame.

First, in the captured image 251, since the person holds the item, the item is detected by the HOID, and an object BB 184 is indicated. At this time, since the object BB 184 is in the temporary stand ROI 151, it is determined that the item is in the temporary stand region 150.

Next, in the captured image 252, which is a frame after the captured image 251, since the person moves the item held by him/her and the object BB 184 is outside the temporary stand ROI 151, it is determined that the item is outside the temporary stand region 150. As described above, in a case where the object BB 184, which is present in the temporary stand ROI 151 goes out in the previous and next frames, the management device 10 counts a counter indicating the number of times the item has left the temporary stand region 150.

However, counting the number of times the item has left the temporary stand region 150 is performed, for example, in order to detect skip scanning an item or the like in comparison with the number of times the item has been scanned or the like. Therefore, for example, it is desirable that the number of times the person takes the item out of the temporary stand region 150 when leaving the checkout area is not included in the count. In light of the above, in this embodiment, whether or not counting has been made for each item is managed, and in a case where counting has been made, control is so performed that counting is not performed redundantly.

FIG. 11 is a diagram illustrating an example of data stored in the temporary stand ROI list 33 according to Example 1. The data of the temporary stand ROI list 33 is newly generated, for example, in a case where an item is detected by the HOID and an item ID is assigned thereto.

In the temporary stand ROI list 33, for example, "ID" indicating the item ID and "previous frame position" indicating the position of the item with respect to the temporary stand ROI 151 in the previous frame are stored in correlation with each other. Further, the temporary stand ROI list 33 also stores correspondingly, for example, "counted" indicating whether or not the number of times the item has exited the temporary stand region 150 has been counted.

In the "previous frame position" of the temporary stand ROI list 33, for example, "OUT" is set in a case where the item is outside the temporary stand ROI 151 in the previous frame of a frame used for determination as to whether the item is inside or outside the temporary stand ROI 151, and "IN" is set in a case where the item is inside the temporary stand ROI 151 in that previous frame. Further, in the "counted" of the temporary stand ROI list 33, "true" is set in a case where the number of times the item has exited the temporary stand region 150 has been counted, and "false" is set in a case where the number of times the item has exited the temporary stand region 150 has not been counted.

In a case where the item is detected by the HOID and the item ID is assigned thereto, for example, "OUT" or "IN" is set in the "previous frame position" of the temporary stand ROI list 33 depending on the current position of the item with respect to the temporary stand ROI 151, and "false" is set in the "counted".

Then, in a case where the "counted" indicates "false", the "previous frame position" indicates "IN", and the position of the item in the current frame with respect to the temporary stand ROI 151 indicates "OUT" in the temporary stand ROI list 33, the number of times the item has exited the temporary stand region 150 is counted. At this time, since the number of times the item has exited the temporary stand region 150 is counted, "counted" of the temporary stand ROI list 33 is updated with "true".

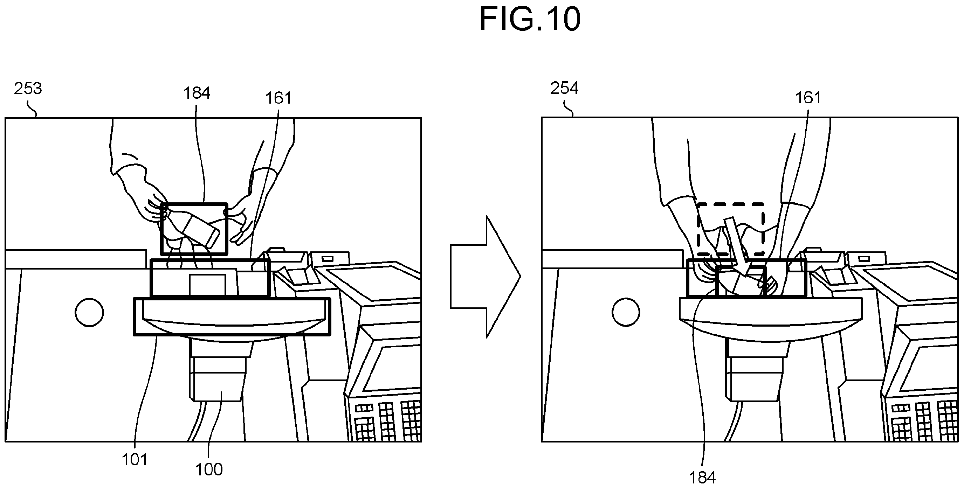

The description goes on to a method for counting an item that has entered the register front region 160. FIG. 10 is a diagram illustrating an example of the method for counting an item that has entered a register front ROI according to Example 1. In FIG. 10, a register front ROI 161 indicates the register front region 160 in captured images 253 and 254. Further, a self-checkout BB 101 is, for example, a bounding box of the self-checkout terminal 100 detected by the HOID in response to a person bringing his/her hand closer to the self-checkout terminal 100. A predetermined region in the front portion of the self-checkout BB 101 may be set as the register front ROI 161. The management device 10 counts the item which enters the register front ROI 161 on the basis of the positional relationship between the items detected for each frame.

First, in the captured image 253, since the object BB 184 indicating the item held by the person is outside the register front ROI 161, it is determined that the item is outside the register front region 160.

Next, in the captured image 254, which is a frame after the captured image 253, since the person moves the item held by him/her and the object BB 184 is inside the register front ROI 161, it is determined that the item is inside the register front ROI 161. As described above, in a case where the object BB 184, which is present outside the register front ROI 161 in the previous and next frames, enters inside, the management device 10 counts a counter indicating the number of times the item has entered the register front region 160.

However, counting the number of times the item has entered the register front region 160 is performed, for example, in order to detect skip scanning an item or the like in comparison with the number of times the item has been scanned or the like. Therefore, for example, it is desirable that the number of times the item has entered the register front region 160 when the person brings the item into the checkout area and passes in front of the cash register is not included in the count. In light of the above, in this embodiment, whether or not counting has been made for each item is managed, and in a case where counting has been made, control is so performed that counting is not performed redundantly.

FIG. 12 is a diagram illustrating an example of data stored in the register front ROI list 34 according to Example 1. The data of the register front ROI list 34 is newly generated, for example, in a case where an item is detected by the HOID and an item ID is assigned thereto.

In the register front ROI list 34, for example, "ID" indicating the item ID and "previous frame position" indicating the position of the item with respect to the register front ROI 161 in the previous frame are stored in correlation with each other. Further, the register front ROI list 34 also stores correspondingly, for example, "counted" indicating whether or not the number of times the item has entered the register front region 160 has been counted.

In the "previous frame position" of the register front ROI list 34, for example, "OUT" is set in a case where the item is outside the register front ROI 161 in the previous frame of a frame used for determination as to whether the item is inside or outside the register front ROI 161, and "IN" is set in a case where the item is inside the register front ROI 161 in that previous frame. Further, in the "counted" of the register front ROI list 34, "true" is set in a case where the number of times the item has entered the register front region 160 has been counted, and "false" is set in a case where the number of times the item has entered the register front region 160 has not been counted.

In a case where the item is detected by the HOID and the item ID is assigned thereto, for example, "OUT" or "IN" is set in the "previous frame position" of the register front ROI list 34 depending on the current position of the item with respect to the register front ROI 161, and "false" is set in the "counted".

Then, in a case where the "counted" indicates "false", the "previous frame position" indicates "OUT", and the position of the item in the current frame with respect to the register front ROI 161 indicates "IN" in the register front ROI list 34, the number of times the item has entered the register front region 160 is counted. At this time, since the number of times the item has entered the register front region 160 is counted, "counted" of the register front ROI list 34 is updated with "true".

### Flow of Processing

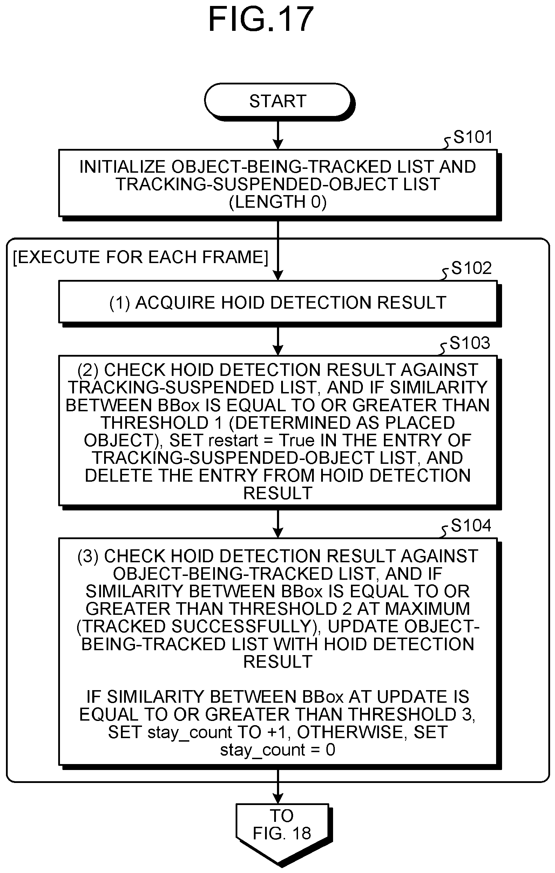

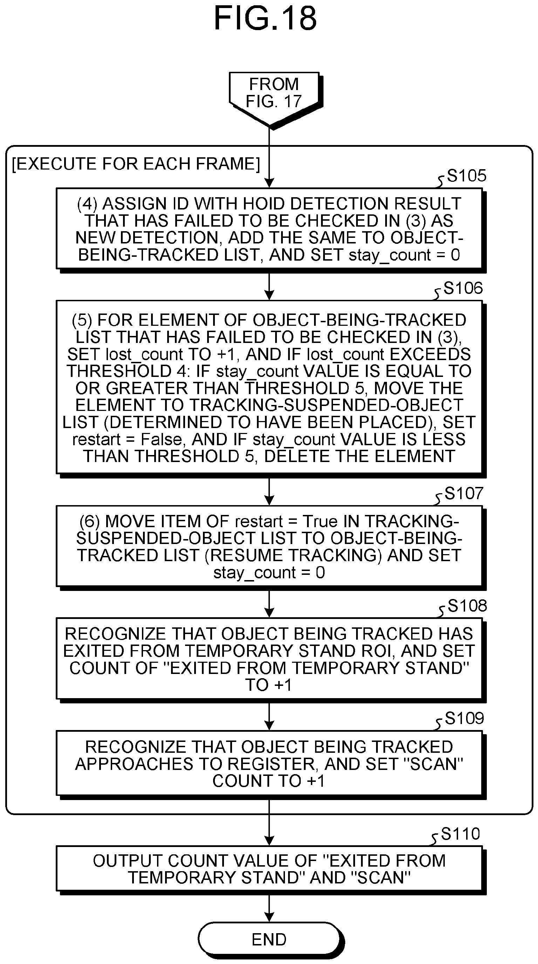

The description goes on to the flow of item tracking processing executed by the management device 10 with reference to FIGS. 17 and 18. FIG. 17 is a flowchart depicting the flow of the item tracking processing (1) according to Example 1. The item tracking processing illustrated in FIG. 17 may be started, for example, in response to a customer entering a checkout area where the self-checkout terminal 100 is installed.

First, as illustrated in FIG. 17, the management device 10 initializes the object-being-tracked list 35 and the tracking-suspended-object list 36 (Step S101).

Next, the management device 10 acquires the result of detection by the HOID for a captured image in which a predetermined imaging range such as in front of the self-checkout terminal 100 is captured by the camera device 200 (Step S102). Thereafter, Steps S102 to S109 are repeatedly executed for each frame.

Next, the management device 10 checks the HOID detection result acquired in Step S102 against the bounding box indicated in the "Bbox" of the tracking-suspended-object list 36, and determines the similarity between the bounding boxes of the items (Step S103). In a case where the similarity is equal to or greater than a predetermined threshold such as 1 and it is determined that the item "has been placed" in Step S103, the "restart" of the corresponding entry of the tracking-suspended-object list 36 is set to "true", and the entry is deleted from the HOID detection result.

Next, the management device 10 checks the HOID detection result acquired in Step S102 against the bounding box indicated in the "Bbox" of the object-being-tracked list 35, and determines the similarity between the bounding boxes of the items (Step S104). In a case where the similarity is equal to or greater than a predetermined threshold such as 2 in Step S104, it is determined that the item detected by the HOID is an item being tracked, and the object-being-tracked list 35 is updated on the basis of the HOID detection result. Then, at the time of updating the object-being-tracked list 35, in a case where the similarity is equal to or greater than a predetermined threshold such as 3 and it is determined that the item being tracked is "not moved", the "stay_count" of the object-being-tracked list 35 is counted up, and in a case where the similarity is less than the predetermined threshold, it is reset. Step S105 and subsequent steps are described with reference to FIG. 18.

FIG. 18 is a flowchart depicting the flow of the item tracking processing (2) according to Example 1. Next, the management device 10 assigns an ID to an item of the HOID detection result which has failed to be checked in Step S104 as new detection, and adds data to the object-being-tracked list 35 (Step S105). At this time, an initial value of 0 (zero) is set in the "stay_count" of the object-being-tracked list 35.

Next, the management device 10 counts up the "lost_count" of the item of the object-being-tracked list 35 which has failed to be checked in Step S104 (Step S106). Then, in a case where the value of the "lost _count" exceeds a predetermined threshold such as 4 and the value of the "stay_count" is equal to or greater than a predetermined threshold such as 5, the management device 10 determines that the item of the object-being-tracked list 35 which has failed to be checked in Step S104 "has been placed". The item determined to "have been placed" is moved from the object-being-tracked list 35 to the tracking-suspended-object list 36. At this time, "false" is set in the "restart" of the tracking-suspended-object list 36. On the other hand, in a case where the value of the "lost_count" exceeds a predetermined threshold such as 4 and the value of the "stay_count" is less than the predetermined threshold, the management device 10 deletes the data of the item of the object-being-tracked list 35 which has failed to be checked in Step S104. The item is, for example, an item that has already exited the checkout area.

Next, the management device 10 moves the item for which the "restart" in the tracking-suspended-object list 36 is "true" to the object-being-tracked list 35 and resumes tracking (Step S107). At this time, an initial value of 0 (zero) is set in the "stay_count" of the object-being-tracked list 35.

Next, the management device 10 recognizes that the item being tracked has exited from the temporary stand ROI 151, and counts up the number of times the item has exited from the temporary stand region 150 (Step S108).

Next, the management device 10 recognizes that the item being tracked enters the register front ROI 161 from the outside to approach the self-checkout terminal 100, and counts up the number of times the item has been scanned, that is, the number of times the item has entered the register front region 160 (Step S109).

Next, the management device 10 outputs the number of times the item counted in Steps S108 and S109 has exited from the temporary stand region 150 and the number of times the item has been scanned (Step S110). After the execution of Step S110, the item tracking processing illustrated in FIGS. 17 and 18 ends; however, for example, in a case where a difference between the number of times the item has exited from the temporary stand region 150 and the number of times the item has been scanned is a predetermined number or more, it is determined that scanning an item is possibly skipped. In such a case, the management device 10 can notify the staff terminal 300 or the like of the alert.

### Effects

As described above, the management device 10 tracks an action taken by a user on an object on the basis of a captured image, distinguishes, on the basis of the action, between a first action in which the user holds the object and a second action in which the user releases the object held by the user, stores, on a first storage unit, first identification information and first location information with respect to the first action, stores, on a second storage unit, second identification information and second location information with respect to the second action, and in a case where the first action is detected at a position indicated in the second location information, stores the second identification information and the second location information on the first storage unit.

As described above, the management device 10 can more accurately detect the action taken by a customer who uses the self-checkout by distinguishing between the action of holding an item and the action of releasing the item to store a position where the item is released and an identifier, and taking over the stored identifier in a case where the action of holding is detected at the position where the item is released.

Further, the management device 10 detects that the object has exited a first region in the captured image to count a first counter, detects that the object has entered a second region in the captured image to count a second counter, and outputs the first counter and the second counter.

This enables the management device 10 to provide information for more accurately detecting the action taken by the customer who uses the self-checkout.

Further, the processing of tracking the action executed by the management device 10 includes tracking the action taken by the user on the object by using the HOID.

This enables the management device 10 to more accurately detect the action taken by the customer who uses the self-checkout.

Further, the management device 10 acquires a result of detection of the HOID, and, in a case where a similarity between a second bounding box indicated by the second location information stored on the second storage unit and a third bounding box of the object in the result of detection of the HOID is equal to or greater than a predetermined threshold, detects the first action on the object of the second bounding box.

This enables the management device 10 to more accurately detect the action taken by the customer who uses the self-checkout.

Further, the management device 10 acquires a result of detection of the HOID, and, in a case where a similarity between a first bounding box indicated by the first location information stored on the first storage unit and a third bounding box of the object in the result of detection of the HOID is equal to or greater than a predetermined threshold, determines that the object of the first bounding box is not moved.

This enables the management device 10 to more accurately detect the action taken by the customer who uses the self-checkout.

Further, in the processing of determining that the object is not moved, the management device 10 detects, in a case where the object of the first bounding box is determined not to be moved, more than a predetermined number of times, in a plurality of the captured images captured in succession, the second action with respect to the object of the first bounding box.

This enables the management device 10 to more accurately detect the action taken by the customer who uses the self-checkout.

### System

The processing procedures, the control procedures, the specific names, and the information including various types of data and parameters illustrated in the document or the drawings may be arbitrarily changed unless otherwise specified. Further, the specific examples, distributions, numerical values, and the like described in the examples are merely examples, and may be arbitrarily changed.

Further, specific forms of distribution and integration of the constituent elements of each device are not limited to those illustrated in the drawings. In other words, all or a part of the constituent elements may be functionally or physically distributed/integrated in an arbitrary unit according to various loads, usage conditions, and the like. Further, all or an arbitrary part of each processing function of each device can be implemented by a central processing unit (CPU) and a program analyzed and executed by the CPU, or can be implemented as hardware by wired logic.

### Hardware

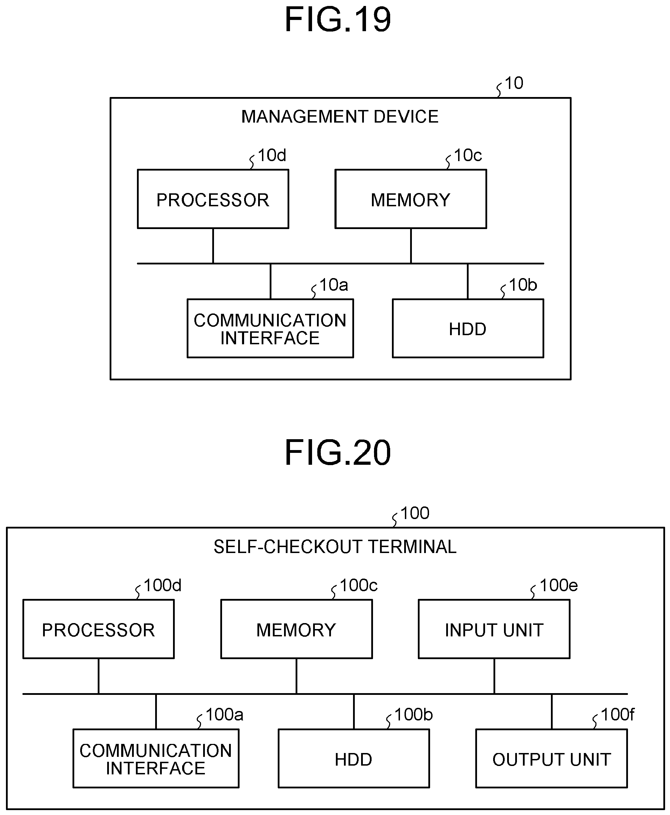

FIG. 19 is an explanatory diagram of an example of the hardware configuration of the management device 10. As illustrated in FIG. 19, the management device 10 includes a communication interface 10a, a hard disk drive (HDD) 10b, a memory 10c, and a processor 10d. The individual units illustrated in FIG. 19 are connected to one another by a bus or the like.

The communication interface 10a is a network interface card or the like, and communicates with another information processing device. The HDD 10b stores programs and data for operating the functions illustrated in FIG. 4.

The processor 10d is a hardware circuit that reads, from the HDD 10b or the like, a program for executing processing similar to that of each processing unit illustrated in FIG. 4 and loads the program in the memory 10c to operate the process for executing the functions described with reference to FIG. 4 and the like. That is, the process executes a function similar to that of each processing unit included in the management device 10. Specifically, the processor 10d reads, from the HDD 10b and the like, a program having functions similar to those of the acquisition unit 41, the detection unit 42, and the like. The processor 10d then executes a process for executing processing similar to that of the acquisition unit 41, the detection unit 42, and the like.

As described above, the management device 10 operates as an information processing device that executes operation control processing by reading and executing a program that executes processing similar to that of each processing unit illustrated in FIG. 4. Further, the management device 10 can also implement functions similar to those of the examples described above by reading a program from a recording medium with a medium reading device and executing the program thus read. Note that the program referred to in another example is not limited to being executed by the management device 10. For example, this embodiment may be similarly applied to a case where another computer or server executes a program or a case where they execute a program in cooperation.

Further, a program that executes processing similar to that of each processing unit illustrated in FIG. 4 can be distributed via a network such as the Internet. Further, this program is recorded on a computer-readable recording medium such as a hard disk, a flexible disk (FD), a CD-ROM, a magneto-optical disk (MO), or a digital versatile disc (DVD), and can be executed in response to the program read out from the recording medium by the computer.

FIG. 20 is an explanatory diagram of an example of the hardware configuration of the self-checkout terminal 100. As illustrated in FIG. 20, the self-checkout terminal 100 includes a communication interface 100a, an HDD 100b, a memory 100c, a processor 100d, an input unit 100e, and an output unit 100f. The individual units illustrated in FIG. 20 are connected to one another by a bus or the like.

The communication interface 100a is a network interface card or the like, and communicates with another information processing device. The HDD 100b stores programs and data for operating the functions of the self-checkout terminal 100.

The processor 100d is a hardware circuit that reads, from the HDD 100b or the like, a program for executing processing of the functions of the self-checkout terminal 100 and loads the program in the memory 100c to operate the process for executing the functions of the self-checkout terminal 100. That is, the process executes a function similar to that of each processing unit included in the self-checkout terminal 100.

As described above, the self-checkout terminal 100 operates as an information processing device that executes operation control processing by reading and executing a program that executes processing of the functions of the self-checkout terminal 100. Further, the self-checkout terminal 100 can also implement the functions of the self-checkout terminal 100 by reading a program from a recording medium with a medium reading device and executing the program thus read. Note that the program referred to in another example is not limited to being executed by the self-checkout terminal 100 For example, this embodiment may be similarly applied to a case where another computer or server executes a program or a case where they execute a program in cooperation.

Further, a program that executes processing of the functions of the self-checkout terminal 100 can be distributed via a network such as the Internet. Further, this program is recorded on a computer-readable recording medium such as a hard disk, an FD, a CD-ROM, an MO, or a DVD, and can be executed in response to the program read out from the recording medium by the computer.

The input unit 100e detects various input operations by a user, such as an input operation on a program executed by the processor 100d. The input operation includes, for example, a touch operation. In the case of the touch operation, the self-checkout terminal 100 may further include a display unit, and the input operation detected by the input unit 100e may be a touch operation on the display unit. The input unit 100e may be, for example, a button, a touch panel, a proximity sensor, or the like.

The output unit 100f outputs data outputted from the program executed by the processor 100d via an external device connected to the self-checkout terminal 100, for example, an external display device. Note that, in a case where the self-checkout terminal 100 is provided with the display unit, the self-checkout terminal 100 does not need to be provided with the output unit 100f.

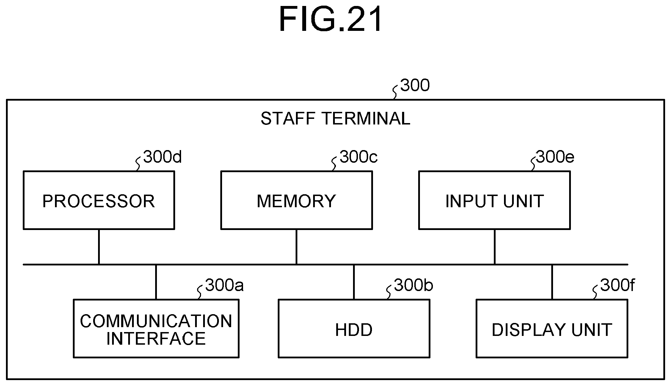

FIG. 21 is an explanatory diagram of an example of the hardware configuration of the staff terminal 300. As illustrated in FIG. 21, the staff terminal 300 includes a communication interface 300a, an HDD 300b, a memory 300c, a processor 300d, an input unit 300e, and a display unit 300f. The individual units illustrated in FIG. 21 are connected to one another by a bus or the like.

The communication interface 300a is a network interface card or the like, and communicates with another information processing device. The HDD 300b stores programs and data for operating the functions of the staff terminal 300.

The processor 300d is a hardware circuit that reads, from the HDD 300b or the like, a program for executing processing of the functions of the staff terminal 300 and loads the program in the memory 300c to operate the process for executing the functions of the staff terminal 300. That is, the process executes a function similar to that of each processing unit included in the staff terminal 300.

As described above, the staff terminal 300 operates as an information processing device that executes operation control processing by reading and executing a program that executes processing of the functions of the staff terminal 300. Further, the staff terminal 300 can also implement the functions of the staff terminal 300 by reading a program from a recording medium with a medium reading device and executing the program thus read. Note that the program referred to in another example is not limited to being executed by the staff terminal 300. For example, this embodiment may be similarly applied to a case where another computer or server executes a program or a case where they execute a program in cooperation.

Further, a program that executes processing of the functions of the staff terminal 300 can be distributed via a network such as the Internet. Further, this program is recorded on a computer-readable recording medium such as a hard disk, an FD, a CD-ROM, an MO, or a DVD, and can be executed in response to the program read out from the recording medium by the computer.

The input unit 300e detects various input operations by a user, such as an input operation on a program executed by the processor 300d. Examples of the input operation include a touch operation and insertion of an earphone terminal into the staff terminal 300. Here, the touch operation means various touch operations on the display unit 300f, for example, tapping, double tapping, swiping, pinching, and the like. Further, the touch operation includes, for example, an operation of bringing an object such as a finger closer to the display unit 300f. The input unit 300e may be, for example, a button, a touch panel, a proximity sensor, or the like.

The display unit 300f displays various types of visual information under the control of the processor 300d. The display unit 300f may be a liquid crystal display (LCD), an organic light emitting diode (OLED), a so-called organic electro luminescence (EL) display, or the like.

## Claims

1. An information processing program that causes a computer(10) to execute processing comprising:
tracking an action taken by a user on an object on a basis of a captured image;
distinguishing, on a basis of the action, between a first action in which the user holds the object and a second action in which the user releases the object held by the user; (S11,S12)
storing, on a first storage unit(35), first identification information and first location information with respect to the first action;(S11)
storing, on a second storage unit(36), second identification information and second location information with respect to the second action;(S12) and
in a case where the first action is detected at a position indicated in the second location information, storing the second identification information and the second location information on the first storage unit (35) . (S14)

2. The information processing program according to claim 1, causes the computer(10) to execute processing comprising
detecting that the object exits a first region in the captured image to count a first counter,
detecting that the object enters a second region in the captured image to count a second counter, and
outputting the first counter and the second counter.

3. The information processing program according to claim 1, wherein the processing of tracking the action includes tracking the action taken by the user on the object by using human-object interaction detection (HOID).

4. The information processing program according to claim 3, causes the computer(10) to execute processing comprising
acquiring a result of detection of the HOID, and
in a case where a similarity between a second bounding box indicated by the second location information stored on the second storage unit(36) and a third bounding box of the object in the result of detection is equal to or greater than a predetermined threshold, detecting the first action on the object of the second bounding box.

5. The information processing program according to claim 3, causes the computer(10) to execute processing comprising
acquiring a result of detection of the HOID, and
in a case where a similarity between a first bounding box indicated by the first location information stored on the first storage unit(35) and a third bounding box of the object in the result of detection is equal to or greater than a predetermined threshold, determining that the object of the first bounding box is not moved.

6. The information processing program according to claim 5, wherein
the processing of determining that the object is not moved includes,
in a case where the object of the first bounding box is determined not to be moved, more than a predetermined number of times, in a plurality of captured images captured in succession, detecting the second action with respect to the object of the first bounding box.

7. An information processing method executed by a computer(10) comprising:
tracking, an action taken by a user on an object on a basis of a captured image,
distinguishing, on a basis of the action, between a first action in which the user holds the object and a second action in which the user releases the object held by the user,(S11,S12)
storing, on a first storage unit(35), first identification information and first location information with respect to the first action,(S11)
storing, on a second storage unit(36), second identification information and second location information with respect to the second action, (S12) and
in a case where the first action is detected at a position indicated in the second location information, storing by the processor, the second identification information and the second location information on the first storage unit(35).(S14)

8. The information processing method according to claim 7, further comprising:
detecting, that the object exits a first region in the captured image to count a first counter;
detecting, that the object enters a second region in the captured image to count a second counter; and
outputting, the first counter and the second counter.

9. The information processing method according to claim 7, wherein the tracking the action includes tracking the action taken by the user on the object by using human-object interaction detection (HOID).

10. The information processing method according to claim 9, further comprising:
acquiring, a result of detection of the HOID; and
in a case where a similarity between a second bounding box indicated by the second location information stored on the second storage unit(36) and a third bounding box of the object in the result of detection is equal to or greater than a predetermined threshold, detecting, the first action on the object of the second bounding box.

11. The information processing method according to claim 9, further comprising:
acquiring, a result of detection of the HOID; and
in a case where a similarity between a first bounding box indicated by the first location information stored on the first storage unit(35) and a third bounding box of the object in the result of detection is equal to or greater than a predetermined threshold, determining, that the object of the first bounding box is not moved.

12. The information processing method according to claim 11, wherein
the determining that the object is not moved includes,
in a case where the object of the first bounding box is determined not to be moved, more than a predetermined number of times, in a plurality of captured images captured in succession, detecting the second action with respect to the object of the first bounding box.

13. An information processing device(10) comprising:
a controller(40) that executes processing including
tracking an action taken by a user on an object on a basis of a captured image,
distinguishing, on a basis of the action, between a first action in which the user holds the object and a second action in which the user releases the object held by the user, (S11,S12)
storing, on a first storage unit(35), first identification information and first location information with respect to the first action,(S11)
storing, on a second storage unit(36), second identification information and second location information with respect to the second action, (S12) and
in a case where the first action is detected at a position indicated in the second location information, storing the second identification information and the second location information on the first storage unit (35) . (S14)

14. The information processing device according to claim 13, wherein the controller(40) executes processing including
detecting that the object exits a first region in the captured image to count a first counter,
detecting that the object enters a second region in the captured image to count a second counter, and
outputting the first counter and the second counter.

15. The information processing device according to claim 13, wherein the processing of tracking the action includes tracking the action taken by the user on the object by using human-object interaction detection (HOID).

16. The information processing device according to claim 15, wherein the controller(40) executes processing including
acquiring a result of detection of the HOID, and
in a case where a similarity between a second bounding box indicated by the second location information stored on the second storage unit(36) and a third bounding box of the object in the result of detection is equal to or greater than a predetermined threshold, detecting the first action on the object of the second bounding box.

17. The information processing device according to claim 15, wherein the controller(40) executes processing including
acquiring a result of detection of the HOID, and
in a case where a similarity between a first bounding box indicated by the first location information stored on the first storage unit(35) and a third bounding box of the object in the result of detection is equal to or greater than a predetermined threshold, determining that the object of the first bounding box is not moved.

18. The information processing device according to claim 17, wherein
the processing of determining that the object is not moved includes,
in a case where the object of the first bounding box is determined not to be moved, more than a predetermined number of times, in a plurality of captured images captured in succession, detecting the second action with respect to the object of the first bounding box.
